(19) Europäisches Patentamt
European Patent Office
Office européen des brevets

(11) Publication number: 0 018 415
B1

(12) **EUROPEAN PATENT SPECIFICATION**

(45) Date of publication of patent specification: 13.10.82

(51) Int. Cl.$^3$: C 07 F 9/32

(21) Application number: 79900528.5

(22) Date of filing: 10.04.79

(86) International application number: PCT/JP79/00091

(87) International publication number: WO 79/01114 13.12.79 Gazette 79/25

(54) **Process for producing alkyl 4-(alkoxy methyl phosphinoyl)butyrates and alkyl-(2-amino-4-(alkoxy methyl phosphinoyl)) butyrates.**

(30) Priority: 25.05.78 JP 61642/78
01.08.78 JP 93174/78

(43) Date of publication of application: 12.11.80 Bulletin 80/23

(45) Publication of the grant of the patent: 13.10.82 Bulletin 82/41

(84) Designated Contracting States: DE FR GB

(56) References cited:
JP - A - 48 091 019
JP - A - 49 013 123
JP - A - 52 073 825
JP - A - 52 139 727

(73) Proprietor: MEIJI SEIKA KAISHA LTD.
4-16 Kyobashi 2-chome
Chuo-ku, Tokyo 104 (JP)

(72) Inventor: SUZUKI, Akira
17, Daikan-yamacho 17-chome
Shibuya-ku, Tokyo 150 (JP)
Inventor: TSURUOKA, Takashi
Kawarachodanchi Room No. 14-833, 1 Kawaracho
Saiwai-ku, Kawasaki-shi, Kanagawa 210 (JP)
Inventor: TACHIBANA, Kunitaka
6-1-1119, Isogo 3-chome
Isogo-ku Yokohama-shi, Kanagawa 235 (JP)
Inventor: MIZUTANI, Kazuko
321, Hazawacho Kanagawa-ku
Yokohama-shi, Kanagawa 221 (JP)
Inventor: SEKIZAWA, Yasuharu
2-4, Higashi 3-chome
Shibuya-ku, Tokyo 150 (JP)
Inventor: INOUYE, Shigeharu
16, Tsutsujigaoka Midori-ku
Yokohama-shi, Kanagawa 227 (JP)
Inventor: TAKEMATSU, Tetsuo
612, Minemachi
Utsunomiya-shi, Tochigi 320 (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 018 415 B1

Courier Press, Leamington Spa, England.

(74) Representative: **Eitle, Werner, Dipl.-Ing. Dipl.-Ing. Werner Eitle Dr. rer. nat. Klaus Hoffmann et al, Dipl.-Ing. Werner Lehn Dipl.-Ing. Klaus Füchsle Dr. rer. nat. Bernd Hansen Arabellastrasse 4 D-8000 München 81 (DE)**

# Process for producing alkyl 4-(alkoxy methyl phosphinoyl) butyrates and alkyl-[2-amino-4-(alkoxy methyl phosphinoyl)] butyrates

## Scope of the invention

The present invention relates to a process for producing alkyl 4-(alkoxy methyl phosphinoyl)butyrates and alkyl-[2-amino-4-(alkoxy methyl phosphinoyl)] butyrates which are intermediates useful for synthesis of herbicidal and anti-microbial DL-2-amino-4-(hydroxy methyl phosphinoyl)butyric acid.

## Background of the invention

Several processes of producing DL-2-amino-4-(hydroxy methyl phosphinoyl) butyric acid have already been proposed. The examples of these processes include a process of producing said compound through $\beta$-chloroethyl-methyl-phosphinic acid $\beta$-chloroethyl ester, described by H. Gross et al (J. Pract. Chem. 318, p. 157, 1976), a process of producing the same from dialkyl methylphosphonite and 3-halopropanal dialkylacetal, by P. Mastalerz et al (Rocz. Chem. 49, p. 2127, 1975).

Furthermore, the present inventors have also proposed a process using a reaction between a 2-haloethyl-methyl-phosphinic acid ester and acetamidomalonic acid ester (Japanese Preliminary Patent Publication No. 48—91019).

Also in Japanese applications 52—139727, 52—73825 and 49—13123 methods have been described for the production of DL-2-amino-4-(hydroxy methyl phosphinoyl)butyric acid. Furthermore, method there has been suggested e.g. a reaction between vinyl phosphinic acid esters and acetylamino malonic acid esters and subsequent saponification of the adduct. A further method considered for the preparation uses Strecker's synthesis (US—PS 4,168,963).

By the above-mentioned methods it is generally difficult to obtain the starting compounds for the formation of the intermediate product. Because of the high reactivity and instability of the phosphinic acid compounds the risk of side reactions cannot be excluded. In most cases the conversion reaction from the intermediate to the final product represents a complicated reaction, which comprises a saponification as well as decarboxylation step.

## Disclosure of the invention

The present inventors have made extensive research to establish a method to economically produce DL-2-amino-4-(hydroxy methyl phosphinoyl) butyric acid through intermediates different from and more advantageous than those of the above mentioned prior art because of cheaper starting materials.

As a result of extensive investigations, it has been found that alkyl 4-(alkoxy methyl phosphinoyl) butyrate and alkyl-[2-amino-4-(alkoxy methyl phosphinoyl)] butyrate which are derived from vinylacetic acid ester and $\alpha$-substituted amino-vinylacetic acid ester are obtained respectively by phosphorylation with an alkoxy methyl phosphinoyl compound and that said dialkyl esters can be effectively used for synthesis of DL-2-amino-4-(hydroxy methyl phosphionoyl) butyric acid by way of subsequent two independent pathways.

The present invention is advantageous industrially in that vinylacetic acid ester as a starting material for alkyl 4-(alkoxy methyl phosphinoyl)butyrate and its 2-substituted amino derivatives is inexpensive, and that the consumption of expensive phosphorous agent is limited to a minimum.

The present invention will be described in more detail.

As a starting material, there is used vinylacetic acid ester or an $\alpha$-substituted amino-vinylacetic acid ester represented by the general formula (1)

$$CH_2{=}CH{-}\underset{\displaystyle R_1}{\underset{|}{CH}}{-}COOR_2 \qquad (1)$$

wherein $R_1$ represents a hydrogen atom, an acylamino group of the formula $R_3CONH$— (Where $R_3$ is a $C_1$—$C_5$ lower alkyl group, a trifluoromethyl group, a trichloromethyl group, a monochloromethyl group or a phenyl group), a phthalimino group, or an N-acyl-N-benzylamino group of the formula

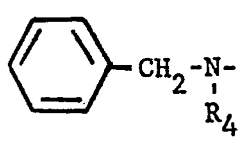

(where $R_4$ is an acetyl group, a trifluoroacetyl group or a benzoyl group), and $R_2$ represents a $C_1$—$C_5$ lower alkyl group, which may be straight or branched.

The ester of N-acyl-vinylglycine, which is one of the representatives of $\alpha$-substituted amino-vinylacetic acid esters of the formula (1) in which $R_1$ is not hydrogen, is obtained by treating vinylglycine (J.E. Baldwin et al, J. Org. Chem. 42, 1239, 1977) with an acid anhydride such as acetic anhydride,

propionic anhydride or trifluoroacetic anhydride, or with an acid chloride such as acetyl chloride or benzoyl chloride and esterifying the N-acyl compound obtained.

The ester of N-benzyl-N-acyl-vinylglycine is obtained by reacting an $\alpha$-bromo-vinylacetic acid ester with benzylamine in an organic solvent such as dimethylformamide, benzene, toluene, or dimethylsulfoxide and subjecting the resulting N-benzyl-vinylglycine ester to N-acylation with acetic anhydride or trifluoroacetic anhydride.

N-phthaloyl-vinylglycine ester is obtained by reacting $\alpha$-bromovinylacetic acid ester with potassium phtalimide in a solvent such as dimethylformamide or dimethylsulfoxide.

The vinylacetic acid ester or $\alpha$-substituted amino-vinylacetic acid ester is reacted with an alkoxy methyl phosphinoyl compound of the general formula (2)

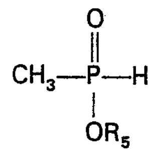

(2)

wherein $R_5$ represents a $C_1$—$C_5$ lower alkyl group (straight or branched), in the presence of a free radical-generating agent such as di-t-butyl peroxide, dibenzoyl peroxide, t-butyl peroxide, t-butyl hydroperoxide or acetylbenzoyl peroxide, or under ultraviolet-irradiating condition, usually in a solvent-free medium at a temperature ranging from 100 to 200°C for a reaction time of 1 to 8 hours.

This reaction can be also conducted in an organic solvent such as toluene and xylene.

By this reaction, there is obtained a alkyl 4-(alkoxy methyl phosphinoyl)butyrate and alkyl-[2-amino-4-(alkoxy methyl phosphinoyl)] butyrate as a product of this invention, each expressed by the general formula (3)

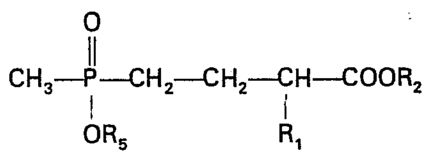

(3)

wherein $R_1$, $R_2$ and $R_5$ have each the same meaning as defined above.

The herbicidal DL-2-amino-4-(hydroxy methyl phosphinoyl)butyric acid can be prepared by subsequent different processes corresponding to the substituent $R_1$, as described below.

The resulting 4-(alkoxy methyl phosphinoyl) butyrate of the formula (3) in which the $R_1$ is hydrogen is subjected to a hydrolysis reaction under an appropriate condition with an acid, such as hydrochloric acid, sulfuric acid, hydrobromic acid or trifluoroacetic acid, or an alkaline solution, such as of sodium hydroxide, potassium hydroxide or barium hydroxide, to effect deesterification of the carboxylic ester, thereby giving 4-(hydroxy methyl phosphinoyl) butyric acid or 4-(alkoxy methyl phosphinoyl) butyric acid of the general formula (4)

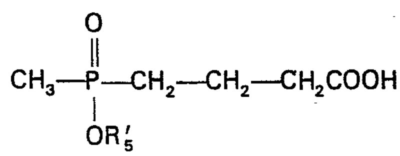

(4)

wherein $R_5'$ represents hydrogen atom or a lower alkyl of $C_1$—$C_5$ atoms (straight or branched).

For instance, when alkyl 4-(alkoxy methyl phosphinoyl) butyrate is heated in 0.1 to 2N sodium hydroxide solution in water, aqueous ethyl alcohol or aqueous acetone, at 40 to 80°C for 1 to 5 hours, there is obtained 4-(hydroxy methyl phosphinoyl)butyric acid. When alkyl 4-(alkoxy methyl phosphinoyl)butyrate is heated in aqueous 0.5 to 1N hydrochloric acid at a temperature of 50 to 70°C for 1 to 2 hours, the carboxylic acid ester alone is deesterified, there is obtained 4-(alkoxy methyl phosphinoyl)butyric acid. Particularly, in the case of t-butyl ester of the carboxylic acid, the selective deesterification proceeds easily even at room temperature.

The compound of the general formula (4) is converted to 2-halogenocarboxylic acid of the general formula (5)

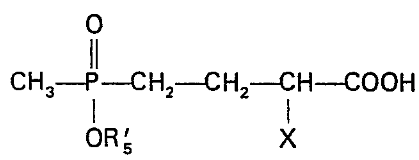

(5)

wherein $R_5'$ has the same meaning as defined above, and X represents a halogen atom, by the use of the halogenation reaction at the $\alpha$-position of the carboxylic acid, as described below.

For example, the halogenation reaction is easily conducted either by subjecting the compound of the formula (4) to a bromination with bromine or a chlorination with sulfuryl chloride in the presence of a compound such as phosphorus trichloride, phosphorus tribromide or red phosphorus, or by converting the compound of the formula (4) to its acid chloride by treating with thionyl chloride, followed by chlorination by the reaction with chlorine gas in the presence of iodine, red phosphorus or an organic peroxide under ultraviolet-irradiating conditions.

Some of the reagents mentioned may induce not only the halogenation, but also conversion of the carboxylic acid moiety into the acid halide. In such a case, however, the treatment with cold water is sufficient to convert the acid halide to the original free carboxylic acid.

The thus obtained $\alpha$-halide of the general formula (5) is then treated with a usually employable aminating agent such as concentrated aqueous ammonia or liquid ammonia to obtain DL-2-amino-4-(hydroxy methyl phosphinoyl) butyric acid as the final compound.

Alternatively, the compound of the general formula (5) may be reacted with sodium nitride or hydrazine to form an $\alpha$-azide compound or an $\alpha$-hydrazine compound which is subsequently reduced in a known manner to obtain the DL-2-amino-4-(hydroxy methyl phosphinoyl) butyric acid.

Alkyl [(2-amino-4-(alkoxy methyl phosphinoyl)]butyrate of the formula (3), in which the $R_1$ is other than hydrogen atom, is hydrolyzed by the use of an inorganic acid such as hydrochloric acid, sulfuric acid or hydrobromic acid or of an alkaline solution containing sodium hydroxide, potassium hydroxide or barium hydroxide to obtain the desired compound of DL-2-amino-4-(hydroxyl methyl phosphinoyl) butyric acid.

The final compound can be separated from the reaction solution advantageously by an ion exchange chromatographic technique or a crystallization technique, by which pure DL-2-amino-4-(hydroxy methyl phosphinoyl)butyric acid can readily be obtained.

Preferred embodiments of the invention

The present invention is now illustrated with reference to the following Examples to which the present invention is not limited in any way.

Example 1

4.08 g of methyl phosphorous monoisobutyl ester was placed in a 20 ml flask, into which 3.42 g of vinylacetic acid ethyl ester containing 0.1 g of t-butyl peroxide was dropped over 3 hours while agitating at 145 to 150°C. After reaction for a further hour at the temperature, the reaction product was dissolved in 20 ml of chloroform, and charged into a silica gel column with a volume of 70 ml, followed by eluting it with a mixed solvent of chloroform and methanol (20:1). The resulting eluate was concentrated to obtain 7.1 g of an oily substance of ethyl-4-(O-isobutyl methyl phosphinoyl) butyrate.

Elementary analysis

| | |
|---|---|
| Found: | C 52.59, H 9.27% |
| Calculated for $C_{11}H_{23}O_4P$: | C 52.80, H 9.20, O 25.60, P 12.40% |

NMR: $\delta^{CDCl_3}_{ppm}$ 2.96 (d, 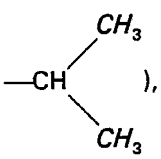 ), 1.25 (t, $—CH_2\,CH_3$), 1.43 (d, $P—CH_3$),

3.73 (t, 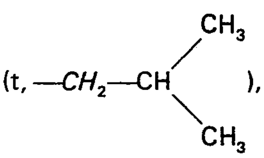 ), 4.18 (q, $—CH_2CH_3$)

Example 2

6.0 g of ethyl-4-(O-isobutyl methyl phosphinoyl) butyrate obtained in Example 1 was dissolved in 40 ml of aqueous 1N sodium hydroxide solution and heated for 3 hours at 80°C.

The resulting reaction product was adjusted to pH 2.0 by addition of an aqueous 5N hydrochloric acid solution, and concentrated and evaporated to dryness as it is. The thus obtained residue was extracted with 30 ml of ethanol and the extract was evaporated to dryness to obtain 3.4 g of a syrup of 4-(hydroxy methyl phosphinoyl) butyric acid.

Elementary analysis

| | |
|---|---|
| Found: | C 36.08, H 6.54% |
| Calculated for $C_5H_{11}O_4P$: | C 36.14; H 6.63, O 38.55, P 18.67% |

To 3.3 g of the thus obtained 4-(hydroxy methyl phosphinoyl)butyric acid, was added 1.76 g of

bromine, to which was further added 0,04 ml of phosphorus trichloride, followed by reacting at 70°C for 15 hours under agitation.

The reaction product was evaporated to dryness to obtain 4.2 g of a crude syrup of 4-(hydroxy methyl phosphinoyl)-2-bromo-butyric acid.

The thus obtained substance was then dissolved without purification, in 30 ml of 28% aqueous ammonia and allowed to stand at room temperature for 6 days. The reaction product was evaporated to dryness to remove excess ammonia therefrom and then dissolved in 5 ml of water. The solution was adjusted to pH 2 with aqueous 5N hydrochloric acid solution and evaporated to dryness. The residue was extracted with 20 ml of ethanol and the extract was subjected to distillation to remove ethanol therefrom. The residue was subjected to column chromatography with 50 ml of Dowex 1 x 2 (acetic acid type) which was developed with an aqueous 3N acetic acid solution, to collect a ninhydrin positive fraction, followed by concentrating and evaporating to dryness to obtain 1.4 g of DL-2-amino-4-(hydroxy methyl phosphinoyl) butyric acid.

## Example 3

5.5 g of the ethyl-4-(O-isobutyl methyl phosphinoyl) butyrate ester obtained according to Example 1 was suspended in 80 ml of an aqueous 1N hydrochloric acid solution and heated at 70°C for 2 hours under agitation.

The reaction solution was evaporated to dryness and dried over sodium hydroxide in high vacuum to obtain 4.6 g of 4-(O-isobutyl methyl phosphinoyl) butyric acid.

It was found from the NMR spectrum that only the absorptions of ethyl-4-(O-isobutyl methyl phosphinoyl) butyrate at 1.25 (t) and 4.18 (g) ppm had disappeared.

Elementary analysis

| | |
|---|---|
| Found: | C 48.52, H 8.63% |
| Calculated for $C_9H_{19}O_4P$: | C 48.65, H 8.65, O 28.83, P 13.96% |

Then, 20 ml of thionyl chloride were added to 4.45 g of the substance for reaction at 50 to 60°C for 2 hours with agitation. To the thionyl chloride solution of the acid chloride obtained were added 0.25 g of iodine, followed by violently agitating at 85 to 90°C under ultraviolet irradiation while passing through chlorine gas. The reaction time was 6 hours. The thionyl chloride was removed from the reaction solution by distillation and 10 ml of ice water were added to the residue to decompose the acid chloride. The solution was again evaporated to dryness, followed by drying over sodium hydroxide in high vacuum to obtain 4.72 g of a syrup of 2-chloro-4-(O-isobutyl methyl phosphinoyl)butyric acid. 300 mg of the resulting syrup was dissolved in 0.5 ml of methanol and was subjected to a silica gel column (40 ml) which was then eluted with $CHCl_3$—$CH_3OH$ (5:1) to obtain 180 mg of sample for analysis.

Elementary analysis

| | |
|---|---|
| Found: | C 41.82, H 7.24, Cl 12.68% |
| Calculated for $C_9H_{18}O_4ClP$: | C 42.10, H 7.02, O 24.95, Cl 13.84, P 12.08% |

NMR: $\delta^{CDCl_3—CD_3OD}_{ppm}$ 2.94 (d, 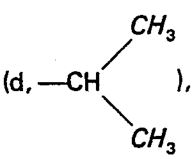), 1.45 (d, P—$CH_3$),

3.73 (t, —$CH_2$—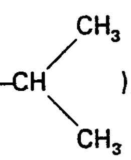), 4.20 (t $H_2$)

The remainder of the syrup was dissolved in 40 ml of 28% aqueous ammonia and allowed to stand for 7 days at room temperature, and heated for 4 hours at 60°C.

The reaction solution was evaporated to dryness and then treated in the same procedure as in example 2 to obtain 1.1 g of DL-2-amino-4-(hydroxy methyl phosphinoyl) butyric acid.

## Example 4

1.2 g of vinylglycine were dissolved in 10 ml of trifluoroacetic acid. There were added 2.4 ml of trifluoroacetic anhydride at 0°C. After being agitated for 30 minutes, the solution was allowed to stand for 3 hours. The reaction solution was evaporated to dryness and the residue was dissolved in 10 ml of methanol, to which 50 ml of an ether solution of diazomethane were added at 0 to 5°C, followed by allowing to stand at 5°C for 1 hour.

The reaction solution was evaporated to dryness to obtain 2.3 g of an oily substance of methyl N-trifluoroacetyl-vinylglycinate.

Then, 1.36 g, of methylphosphorus monoisobutyl ester were added to 2.1 g of the oily substance obtained, followed by agitating at 150°C for 5 hours, while di-t-butyl peroxide, divided into 10 portions, was added portion by portion in a total amount of 0.2 g. The reaction solution was evaporated to dryness and 3.43 g of the product containing methyl-4-(0-isobutyl methyl phosphinoyl)-2-trifluoroacetyl-amino-butyrate was obtained. 200 mg of the product was dissolved in 0.5 ml of chloroform and subjected to a silica gel column (30 ml) which was then eluted with chloroform-methanol (40:1) to obtain 85 mg oily sample to be analyzed.

Elementary analysis

| | |
|---|---|
| Found: | C 41.25, H 6.18, N 3.92% |
| Calculated for $C_{12}H_{21}O_5NPF_3$: | C 41.50, H 6.05, O 23.05, N 4.03, P 8.93, F 16.43% |

NMR: $\delta^{CDCl_3}_{ppm}$ 2.95 (d, 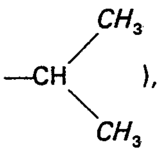), 1.46 (d, P—$CH_3$), 3.72 (s, —$COOCH_3$)

The remainder of the product was dissolved in 20 ml of an aqueous 5N hydrochloric acid and hydrolyzed at 100°C for 4 hours. The hydrolyzed solution was evaporated to dryness and the residue was dissolved in 10 ml of water and discolored with the use of carbon powder, after which it was adjusted to pH 3 with aqueous 3N sodium hydroxide solution. The thus pH-adjusted solution was concentrated to about 3 ml, to which was added 8 ml of ethanol, followed by allowing to stand at low temperature so as to effect crystallization. The crystals were collected by filtration to obtain 1.35 g of white crystals of DL-2-amino-4-(hydroxy methyl phosphinoyl)butyric acid.

This substance was found to exhibit the same melting point as the control substance without showing any depression of melting point.

Example 5

1.8 g of vinylglycine were dissolved in 9 ml of water, into which was dropped 6 ml of acetic acid under ice-cooling over 2 hours with agitation.

The solution was agitated at 5 to 10°C for further 5 hours and then evaporated to dryness, thereby obtaining crystals. The crystals were suspended in 5 ml of acetone and then separated by filtration to obtain 2.1 g of white crystals of N-acetylvinylglycine having a melting point of 118 to 119°C.

2.0 g of the crystals were dissolved in 80 ml of methanol to which was added 0.3 ml of concentrated sulfuric acid, followed by refluxing for 4 hours under heating conditions.

The reaction solution was allowed to cool, neutralized with sodium hydrogen carbonate, and evaporated to dryness. The residue was dissolved in 50 ml of chloroform and washed with 10 ml of a saturated saline solution. The chloroform layer was dehydrated with anhydrous sodium sulfate and evaporated to dryness to give 2.2 g of an oily substance of methyl -N-acetyl-vinylglycinate.

To 1.6 g of the thus obtained methyl-N-acetyl-vinylglycinate were added 1.35 g of methyl phosphorus monoisobutyl ester, to which was further added portion by portion 0.15 g of di-t-butyl poroxide, divided into ten portions, while agitating at 160°C for 4 hours.

The reaction solution was evaporated to dryness to obtain 1.46 g of the product containing methyl-4-(0-isobutyl methyl phosphinoyl)-2-N-acetyl butyrate.

To the product were added 25 ml of aqueous 6N hydrochloric acid solution to hydrolyze at 110°C for 20 hours. Then, the procedure of Example 4 was repeated to obtain 1.12 g of crystals of DL-2-amino-4-(hydroxy methyl phosphinoyl) butyric acid.

Example 6

2.5 g of ethyl $\alpha$-bromo-vinylacetate were dissolved in 10 ml of dimethyl formamide, to which were added 2.38 g of potassium phthalimide, followed by agitating at room temperature for 6 hours.

The reaction solution was diluted by addition of 100 ml of chloroform and the insoluble matter was removed by filtration. The resulting filtrate was washed twice with 30 ml of a saturated saline solution. The chloroform layer was treated with anhydrous sodium sulfate to remove water therefrom, concentrated to about 5 ml, and allowed to stand at a low temperature, whereupon crystals precipitated in small amount. The crystals were removed by filtration and the filtrate was evaporated to dryness to obtain an oily substance. This substance was dissolved in 10 ml of ethyl ether. When the solution was allowed to stand at a low temperature, crystals appeared. The crystals were collected by filtration to obtain 3.5 g of white crystals of ethyl N-phthaloyl-vinylglycinate with a melting point of 95 to 97°C. To 1.29 g of the crystals of ethyl N-phthaloylvinylglycinate were added 0.68 g of methyl-phosphorous monoisobutyl ester and diluted with 3 ml of xylene.

0.1 g of di-t-butyl peroxide which had been divided into ten portions was added portion by portion to the mixture at 140°C over 6 hours under agitation.

The reaction solution was evaporated to obtain 1.46 g of dried product containing ethyl-4-(0-isobutyl methyl phosphinoyl)-2-N-phthalimido butyrate.

The product was dissolved in 5 ml of aqueous 40% sulfuric acid and refluxed for 4 hours to effect hydrolysis. The reaction solution was decolorized with activated carbon powder and allowed to stand at low temperature, followed by separating precipitated crystals of phthalic acid by filtration.

The obtained filtrate was neutralized with barium carbonate to obtain barium sulfate which was filtered off. The filtrate was treated in a similar manner as in Example 4 to obtain 0.3 g of crystals of DL-2-amino-4- (hydroxy methyl phosphinoyl) butyric acid.

**Claim**

A process for the production of alkyl 4-(alkoxy methyl phosphinoyl)butyrates of alkyl-[2-amino-4-(hydroxy methyl phosphinoyl)]butyrates represented by the general formula:

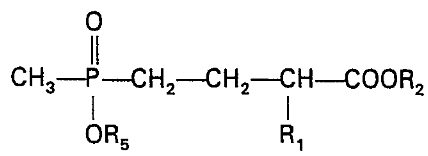

wherein $R_1$ represents a hydrogen atom, an acylamino group of the formula $R_3CONH$— (wherein $R_3$ is a $C_1$—$C_5$ alkyl group, a trifluoromethyl group, a tri- or monochloromethyl group or a phenyl group), a phthalimino group or a N-acyl-N-benzylamino group of the formula

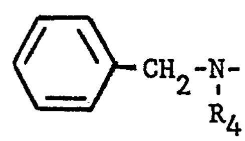

(wherein $R_4$ is an acetyl group, a trifluoroacetyl group or a benzoyl group), and $R_2$ and $R_5$ represent straight or branched $C_1$—$C_5$ alkyl groups, being the same or different from each other, characterized by reacting vinylacetic acid ester or $\alpha$-substituted aminovinylacetic acid ester of the general formula

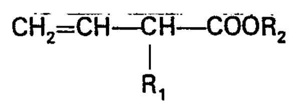

wherein $R_1$ and $R_2$ have each the same meaning as defined above, with an alkoxy methyl phosphinoyl compound of the general formula

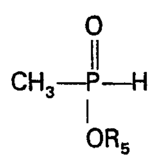

wherein $R_5$ has the same meaning as defined above, in the presence of a free radical-generating agent or under ultraviolet-irradiating conditions at a temperature from 100 to 200°C for a reaction time of 1 to 8 h.

**Revendication**

Procédé pour la production d'alcoxyméthylphosphinoyl-4 butyrates d'alkyle ou d'amino-2 hydroxy méthylphosphinoyl-4 butyrates d'alkyle représentés par la formule générale:

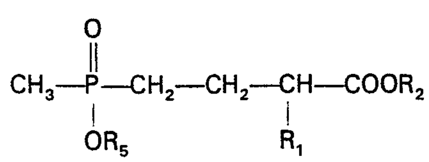

dans laquelle $R_1$ représente un atome d'hydrogène, un radical acylamino de formule $R_3CONH$— (dans laquelle $R_3$ représente un radical alkyle en $C_1$—$C_5$, un radical trifluorométhyle, un radical tri ou mono-

chlorométhyle ou un radical phényle), un radical phtalimino ou un radical N-acyl N-benzylamino de formule:

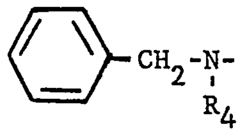

(dans laquelle $R_4$ représente un radical acétyle, un radical trifluoroacétyle ou un radical benzoyle), et $R_2$ et $R_5$ représentent des radicaux alkyles en $C_1$—$C_5$ droits ou ramifiés qui sont sembables ou différents, caractérisé par la réaction d'un ester d'acide vinylacétique ou d'un ester d'acide $\alpha$-(amino substitué) vinylacétique de formule générale

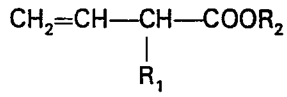

dans laquelle $R_1$ et $R_2$ ont chacun la même définition que ci-dessus, avec un composé de type alcoxyméthylphosphinoyle de formule générale

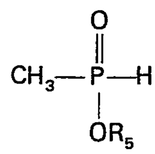

dans laquelle $R_5$ a la même définition que ci-dessus, en présence d'un agent produisant des radicaux libres ou sous irradiation par des ultraviolets à une température comprise entre 100 et 200°C pendant une durée de réaction de 1 à 8 heures.

**Patentanspruch**

Verfahren zur Herstellung von Alkyl-4-(alkoxy-methylphosphinoyl)-butyraten oder Alkyl-[2-amino-4-(hydroxymethyl-phosphinoyl)]-butyraten gemäss der allgemeinen Formel:

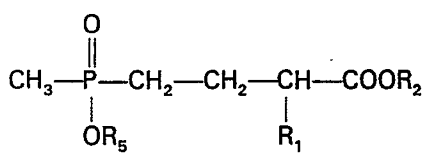

worin $R_1$ ein Wasserstoffatom, eine Acylaminogruppe der Formel $R_3CONH$— (worin $R_3$ eine $C_1$—$C_5$-Alkylgruppe, eine Trifluoromethylgruppe, eine Tri- oder Monochloromethylgruppe oder eine Phenylgruppe darstellt), eine Phthaliminogruppe oder eine N-Acyl-N-benzylaminogruppe der Formel

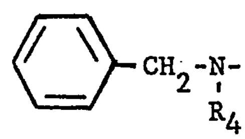

(worin $R_4$ eine Acetylgruppe, eine Trifluoroacetylgruppe oder eine Benzoylgruppe darstellt) bedeutet, und $R_2$ und $R_5$, die gleich oder verschieden voneinander sind, gerade oder verzweigte $C_1$—$C_5$-Alkylgruppen darstellen, gekennzeichnet durch Umsetzung von Vinylessigsäureester oder $\alpha$-substituiertem Aminovinylessigsäureester der allgemeinen Formel

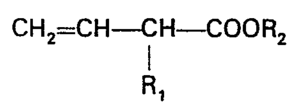

worin $R_1$ und $R_2$ jeweils die vorstehend angegebenen Bedeutungen haben, mit einer Alkoxy-methylphosphinoyl-Verbindung der allgemeinen Formel

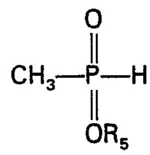

worin $R_5$ die vorstehend angegebene Bedeutung hat, in Gegenwart eines Agens, welches ein freies Radikal bildet, oder bei ultravioletter Bestrahlung bei einer Temperatur von 100 bis 200°C während einer Reaktionszeit von 1 bis 8 h.